# EUROPÄISCHE PATENTSCHRIFT

(11) **EP 1 727 645 B1**
(45) Veröffentlichungstag und Bekanntmachung des Hinweises auf die Patenterteilung: **01.04.2009**
(21) Anmeldenummer: 05728227.9
(22) Anmeldetag: 08.03.2005
(51) Int. Cl.: B23K 26/10, B23K 26/20, B23K 26/04, B25J 19/00

(54) **VERFAHREN ZUM LASERBEARBEITEN UND LASEREINRICHTUNG MIT IN ABHÄNGIGKEIT VON DER LASERBEWEGUNG GESTEUERTER LASERLEISTUNG**
METHOD FOR LASER MACHINING AND LASER DEVICE HAVING LASER POWER WHICH IS CONTROLLED ACCORDING TO LASER MOVEMENT
PROCEDE DE TRAITEMENT AU LASER, ET DISPOSITIF LASER DONT LA PUISSANCE LASER EST COMMANDEE EN FONCTION DU MOUVEMENT DU LASER

(30) Priorität: 09.03.2004 DE 102004011769
(43) Veröffentlichungstag der Anmeldung: 06.12.2006
(73) Patentinhaber: KUKA Systems GmbH, 86165 Augsburg (DE)
(72) Erfinder: RIPPL, Peter, 86163 Augsburg (DE); HESSE, Johann, 86152 Augsburg (DE); ENGLHARD, Anton, 86574 Petersdorf/Schönleiten (DE)
(74) Vertreter: Ernicke, Klaus Stefan
(86) Internationale Anmeldenummer: PCT/EP2005/002438
(87) Internationale Veröffentlichungsnummer: WO 2005/087427

(56) Entgegenhaltungen:
- EP-A- 1 038 640
- WO-A-20/05030427
- FR-A- 2 663 583
- US-A- 5 012 069
- US-A1- 2001 042 737
- US-A1- 2003 192 867
- PATENT ABSTRACTS OF JAPAN Bd. 017, Nr. 520 (M-1482), 20. September 1993 (1993-09-20) -& JP 05 138374 A (MITSUBISHI HEAVY IND LTD), 1. Juni 1993 (1993-06-01)

## Beschreibung

Die Erfindung betrifft ein Verfahren zum Laserbearbeiten und eine Lasereinrichtung mit den Merkmalen im Verfahrens-und Vorrichtungs anspruch (siehe Ansprüche 1 und 6).

Ein Bearbeitungsverfahren nebst Lasereinrichtung zum Laserschweißen von Fahrzeugkarosserien ist aus der DE 103 35 501 A1 bekannt. Von einer Laserquelle wird ein Laserstrahl über eine Leiteinrichtung zu einem Remote-Laserwerkzeug an einer mehrachsigen Hand eines Manipulators geführt und auf ein Werkstück gerichtet. Der Manipulator bewegt hierbei das Remote-Laserwerkzeug in einem kontaktfreien Abstand schwebend über dem Werkstück entlang einer Bearbeitungsbahn. Der Laserstrahl kann hierbei über eine in das Laserschweißwerkzeug integrierte Scanneroptik mit beweglichen Spiegeln abgelenkt werden. Der Manipulator, hier ein mehrachsiger Industrieroboter, ist mit einer Robotersteuerung verbunden, welche die Achsen des Roboters und seiner Roboterhand steuert.

Die DE 43 35 367 A1 zeigt einen mehrachsigen Industrieroboter, in dessen Roboterhand eine Laserschweißeinrichtung integriert ist. Die Laserschweißeinrichtung besitzt einen Sensor zur Erfassung prozessrelevanter Signale aus der Bearbeitungszone,wobei der Sensor an eine Prozesssteuerung oder -regelung für die Laserleistung angeschlossen ist.

Die ältere und nachveröffentlichte WO 2005/030427 A1 zeigt ein Verfahren und eine Lasereinrichtung zum Laserbearbeiten, insbesondere Laserschweißen von Werkstücken, speziell Fahrzeugkarosserien und Karosserieteilen, wobei ein Laserstrahl von mindestens einer Laserquelle über eine Leiteinrichtung zu einem Remote-Laserwerkzeug an einer mehrachsigen Hand eines Manipulators geführt und auf das Werkstück gerichtet wird. Der Manipulator führt das Remote-Laserwerkzeug mit einer Brennweite F in einem kontaktfreien Abstand schwebend über dem Werkstück entlang einer Bearbeitungsbahn und lenkt dabei den Laserstrahl nur über ein Bewegung der Handachsen IV,V,VI um veränderliche Auslenkwinkel ab. Die Leistung der Laserquelle kann in Abhängigkeit von den Orientierungsänderungen bzw. den veränderlichen Einstrahlwinkeln des Laserstrahls am Werkstück nachgeführt werden.

Die US 2003/0192867 A1, die als nächstliegenden Stand der Technick angegehen wird, lehrt eine mehrachsige CNC-Laserschneidmaschine, bei der ein Werkstück um eine Rotationsachse C relativ zu einer Laserdüse gedreht werden kann. Die Laserdüse ist an einem Portal um zwei Linearachsen in der Höhe und seitlich verstellbar gelagert und kann sich außerdem um zwei orthogonale Schwenkachsen drehen. Zum Schneiden ebener Werkstückbereiche wird die Laserdüse über die Linearachsen mit konstanter Winkelausrichtung zum Werkstück entlang der Bearbeitungsbahn geführt. Zum Schneiden der Ecken wird das Werkstück um die Rotationsachse C unter der Laserdüse gedreht, wobei die Laserdüse durch überlagerte Linearachsenbetätigungen eine Bogenbewegung ausführt. Die Drehbewegung des Werkstücks und die Bogenbewegung der Laserdüse werden dabei synchronisiert, um eine konstante relative Vorschubgeschwindigkeit des Laserstrahls gegenüber dem Werkstück zu erreichen. Die Laserstrahlauslassbedingungen werden in Abhängigkeit von der relativen Vorschubgeschwindigkeit eingestellt und werden nur geändert, wenn die relative Vorschubgeschwindigkeit variiert. Die CNC-Laserschneidmaschine hat eine Steuerung, welche die Bewegungsachsen und eine Laserstrahloszillationssteuerung beaufschlagt.

Aus der FR 2,663,583 A1 ist eine Einrichtung zur automatischen Orientierung eines Laserwerkzeugs bekannt, mit der der Fokuspunkt des Laserstrahls auf der Werkstückoberfläche gehalten werden kann, auch wenn das Laserwerkzeug von einem mehrachsigen Manipulator über ein Werkstück mit einer profilierten Oberfläche geführt wird. Hierbei wird der Laserstrahl mit einem konstanten 90°-Einfallwinkel zum Werkstück ausgerichtet. Andererseits ist es über ein Lenkergetriebe möglich, mit einer einzigen vertikalen Antriebs-Hubbewegung das Laserwerkzeug zu schwenken und den Fokuspunkt in der gleichen vertikalen Richtung und fluchtend in der Höhe zu verstellen, um den Fokuspunkt auf der Werkstückoberfläche zu halten.

Aus der EP 1 038 640 A2 ist eine Robotersteuerung bekannt, mit der die Laserintensität eines Laseroszillators nach der relativen Vorschubgeschwindigkeit eines Laserdüsenendes eingestellt wird. Hierdurch kann eine konstante Streckenenergie auch bei Änderungen der Vorschubgeschwindigkeit erzielt werden.

Aus der Praxis ist es ferner bekannt, dass ein Industrieroboter ein Laserschweißwerkzeug mittels einer Andrückvorrichtung in Berührungskontakt über das Werkstück führt. An der Führungsbewegung sind alle Roboter- und Handachsen gleichermaßen beteiligt. Das Laserwerkzeug wird mit einer konstanten Winkelausrichtung gegenüber dem Werkstück bewegt und orientiert, wobei der Laserstrahl stets im Wesentlichen senkrecht auf die Werkstückoberfläche trifft. Als Laserquelle werden konventionelle Nd-YAG-Laser oder CO₂-Laser eingesetzt, die mit überwiegend konstanter Leistung arbeiten und ggf. steuerbar sind. Mit der bekannten Technik lassen sich nur begrenzte Schweißgeschwindigkeiten erzielen. Außerdem ist die Laserschweißtechnik nur in Ausschweißstationen und zum Schweißen langer, unterbrechungsfreier Schweißnähte geeignet. Ein weiteres Problem besteht darin, dass die Roboterbahn zur Führung des Laserwerkzeugs und die Schweißparameter vom Bediener vor Ort selbst ausgetestet und programmiert bzw. geteacht werden müssen.

Ferner ist es im Bereich der Oberflächenbearbeitung und insbesondere Gravur von Werkstücken bekannt, stationäre Laserwerkzeuge mit einer Scanneroptik aus beweglichen Spiegeln zur Ablenkung und Führung des Laserstrahls einzusetzen.

Es ist Aufgabe der vorliegenden Erfindung, eine bessere Laserbearbeitungs technik aufzuzeigen.

Die Erfindung löst diese Aufgabe mit den Merkmalen im Verfahrens- und Vorrichtungshauptanspruch. Das beanspruchte Laserbearbeitungsverfahren und die Lasereinrichtung haben den Vorteil einer wesentlich höheren Bearbeitungsgeschwindigkeit, insbesondere Schweißgeschwindigkeit, und entsprechend kürzerer Zykluszeiten. Die Zykluszeit ist die Summe der Zeiten für eine Schweißaufgabe und die Umorientierung für die nächste Schweißaufgabe. Dies erhöht die Wirtschaftlichkeit und erlaubt es, in der vorgegebenen Taktzeit wesentlich mehr Bearbeitungsvorgänge, insbesondere Schweißprozesse bzw. Schweißaufgaben, mit weniger Geräten am Werkstück durchzuführen. Zudem eignet sich die Lasertechnik für beliebige Laserbearbeitungsverfahren, wobei außer dem bevorzugten Laserschweißen auch Laserschneiden oder andere Laserprozesse möglich sind.

Ein weiterer besonderer Vorteil liegt in der universellen Einsetzbarkeit der Lasertechnik, die sich insbesondere für das Heften lose vorgespannter Karosserieteile in einer formgebenden Geostation oder Framingstation eignen. Insbesondere sind die Nahtformen frei wählbar, wobei Steppnähte, durchgehende Nähte oder Pendelnähte mit seitlicher Auslenkung schweißbar sind.

Durch die Ablenkung des Laserstrahls mittels einer Handachsenbewegung lassen sich sehr hohe Bewegungsgeschwindigkeiten des Laserstrahls und entsprechend hohe Schweißgeschwindigkeiten erzielen. Außerdem lässt sich eine solche Laserstrahlablenkung besonders leicht steuern und überwachen. Dies ist einfacher als eine Laserstrahlablenkung durch ins Laserwerkzeug integrierte Scanneroptiken mit beweglichen Spiegeln. Die Handachsenbewegung kann zudem schneller, zielsicherer und kontrollierter als eine Spiegelbewegung ausgeführt werden. Ferner kann die gesamte Spiegeltechnik entfallen.

Bei den Handachsenbewegungen zur Laserstrahlablenkung können die anderen Roboterachsen im Wesentlichen in Ruhe sein oder nur eine durch den Ablenkungswinkel bedingte Höhenausgleichsbewegung der Hand und des Laserwerkzeugs ausführen. Bei langen Brennweiten von 300 mm und mehr ist ein Höhenausgleich häufig nicht erforderlich. Außerdem ermöglichen lange Brennweiten bei gleichen Schwenkwinkeln längere Schweißnähte bei einem im Wesentlichen stehenden Manipulator oder Roboter.

Alternativ kann der Manipulator eine Versatzbewegung mit seiner Hand ausführen, die der Handachsenbewegung überlagert wird. Hierdurch lassen sich besonders lange Bearbeitungsbahnen oder Schweißbahnen erzielen, die auch beliebig im Raum verlaufen können. Hierbei kann der Manipulator eine im Wesentlichen kontinuierliche Versatzbewegung durchführen, die besonders belastungsgünstig und für die Erzielung hoher Schweißgeschwindigkeiten förderlich ist. Durch eine zumindest partiell entgegengesetzte Laserstrahlablenkung und entsprechende Handachsenbewegung lässt sich hierbei in der Geschwindigkeits- und Orientierungsüberlagerung die gewünschte und insbesondere die optimale Bearbeitungs- und Schweißgeschwindigkeit am Werkstück erzielen. Die Naht kann wahlweise in Richtung oder entgegen der Versatzbewegung geschweißt werden. Über Handachsenbewegungen kann zudem der Laserstrahl seitlich von dem eigentlichen Bahnverlauf ausgelenkt werden, um beliebige Nahtformen schweißen zu können. Außerdem können für den Schweißprozess günstige Einfallwinkel erzielt werden, wobei insbesondere ein stechender Strahleinfall erreichbar ist.

Die in ihrer Leistung veränderliche und in Abhängigkeit von der Laserstrahlbewegung gesteuerte Laserquelle bietet den Vorteil, dass bei der Laserbearbeitung die gewünschte und insbesondere die optimale Streckenenergie am Werkstück eingebracht werden kann. Wenn der Laserstrahl mit hoher Geschwindigkeit über das Werkstück wandert, kann auch die Laserleistung entsprechend hoch sein. Außerdem wird die Laserleistung in Abhängigkeit vom Einstrahlwinkel des Laserstrahls am Werkstück gesteuert, um dem winkelabhängigen, unterschiedlichen Einkoppelverhalten des Laserstrahls Rechnung zu tragen. Bei der Bildung von unterbrochenen Nähten oder sogenannten Steppnähten kann die Laserleistung auch zeitweise abgeschaltet werden. Im Gegensatz zum Stand der Technik muss hierbei keine Laserleistung vernichtet werden. Als in der Leistung steuerbare und auch abschaltbare Laserquellen eignen sich insbesondere Faserlaser, Scheibenlaser oder diodengepumpte Nd-YAG-Laser.

Besondere technische und wirtschaftliche Vorteile ergeben sich, durch die Beaufschlagung der Laserquelle und des Manipulators von einer gemeinsamen Steuerung mit einer Recheneinheit und Speichern für Programme sowie mindestens einer Technologiedatenbank. Diese Steuerung nimmt den Gerätebetreibern und Bedienern die bisherigen sehr aufwändigen und nur von Fachkräften ausführbaren Programmierarbeiten ab. Von Betreiber- oder Bedienerseite brauchen nur noch die Werkstückdaten in die Steuerung eingegeben werden, die auf dieser Datenbasis automatisch die erforderlichen Manipulatorbewegungen und Laser-Prozessparameter ermittelt und ausführt. Die Steuerung generiert hierbei die vom Laserstrahl zu verfolgende Führungsbahn und auch die erforderlichen Orientierungen und Ablenkungen des Laserstrahls über eine entsprechende automatische programmunterstützte Erstellung und Speicherung der Versatzbewegungen des Manipulators und der Handachsenbewegungen. Der Bediener braucht somit den Manipulator im Gegensatz zum Stand der Technik nicht mehr zu teachen. Außerdem werden die Laser-Prozessparameter und insbesondere die erforderlichen Leistungssteuerdaten der Laserquelle entsprechend der Laserstrahlbewegung automatisch ermittelt und eingestellt.

Die Werkstückdaten können vom Bediener per Hand, über einen austauschbaren Datenträger oder auch per Datenfernübertragung über eine Datenleitung in die Steuerung eingegeben werden. Bei einer Datenfernübertragung ist sogar ein vollautomatischer Betrieb möglich. Die beanspruchte Lasertechnik bietet durch diesen hohen Bedienungskomfort eine wesentliche Entlastung des Bedienungspersonals und ermöglicht den Einsatz weniger qualifizierter Bediener oder sogar den weitgehenden Verzicht auf Bedienpersonal.

Die Lasertechnik ist durch den hohen Integrationsgrad mit nur wenig Aufwand an der Arbeitsstelle, insbesondere in einer Roboterzelle oder einer kompletten Fertigungslinie schnell einsetzbar. Die Lasertechnik mit Bearbeitungsverfahren und Lasereinrichtung kann als komplettes Funktionspaket dem Anlagenbetreiber zur Verfügung gestellt werden, der damit ohne großen Vorbereitungsaufwand schnell arbeiten kann. Insbesondere lässt sich die Lasertechnik problemlos in bestehende Fertigungsanlagen integrieren und kann auch für die Umrüstung oder Nachrüstung bestehender Zellen oder Stationen eingesetzt werden.

Zur Komplettierung der Lasertechnik kann noch ein Tooling integriert und vorzugsweise mit der gemeinsamen Steuerung verbunden werden. Dies kann die unterschiedlichsten. Werkzeuge für die Fahrzeugkarosserien oder andere Werkstücke umfassen. Dies sind z.B. Spannwerkzeuge für das lagegenaue Spannen von zu verschweißenden Karosseriebauteilen oder eine Transporteinrichtung für den Wechsel und die exakte Positionierung der Werkstücke.

Die Möglichkeiten der beanspruchten Lasertechnik lassen sich besonders gut bei Einsatz von mehrachsigen Manipulatoren mit mehrachsigen Händen, insbesondere Gelenkarmrobotern mit sechs oder mehr Achsen, ausnutzen. Hierdurch lassen sich die besten Flexibilitäten und die größten Arbeitsräume erzielen. Zudem sind lange Brennweiten der Laserwerkzeuge günstig, um durch kleine und schnell steuerbare Handachsenbewegungen lange Bearbeitungsbahnen erzeugen und große Werkstückbereiche erreichen zu können. Durch die hohen Prozessgeschwindigkeiten sind außerdem weniger Manipulatoren und Laserwerkzeuge als bisher zur Bearbeitung der Werkstücke erforderlich. Dies spart erhebliche Installationskosten und verbessert außerdem die gegenseitige Störproblematik der eingesetzten Geräte.

Die Lasereinrichtung lässt sich außerdem beliebig durch Einsatz mehrerer Manipulatoren oder Roboter mit Laserwerkzeugen erweitern, wobei über eine entsprechende Umschalttechnik die Beibehaltung einer einzigen und gemeinsamen Laserquelle möglich ist, was wegen deren Preis erhebliche Einsparungen mit sich bringt. Die gemeinsame Steuerung kann hierbei universell eingesetzt werden.

In den Unteransprüchen sind weitere vorteilhafte Ausgestaltungen der Erfindung angegeben.

Die Erfindung ist in den Zeichnungen beispielweise und schematisch dargestellt. Im einzelnen zeigen:
- Figur 1:: Eine Lasereinrichtung mit einem Manipulator, einem Laserwerkzeug und einer Laserquelle in Draufsicht,
- Figur 2:: eine Lasereinrichtung in Seitenansicht,

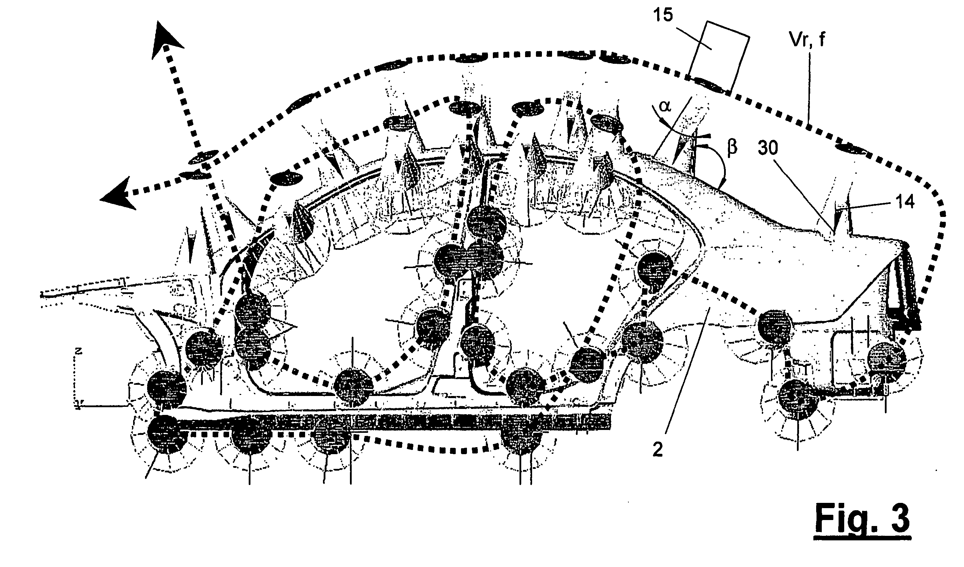

- Figur 3:: eine Fahrzeugkarosserie mit den erforderlichen Schweißbereichen und der zugehörigen Führungsbahn des Laserwerkzeugs und des Manipulators in Seitenansicht,
- Figur 4:: eine vereinfachte und perspektivische Prinzipdarstellung eines Remote-Laserwerkzeugs,
- Figur 5:: eine detailliertere und vergrößerte Seitenansicht des Manipulators mit dem Laserwerkzeug und einem Teil des Werkstücks,
- Figur 6:: eine vergrößerte Seitenansicht der Hand, eines Auslegers und des Laserwerkzeugs,
- Figur 7:: eine Prinzipskizze der Laserstrahlbewegung am Werkstück,
- Figur 8:: eine Prinzipdarstellung der Geschwindigkeitsüberlagerungen,
- Figur 9:: eine Darstellung verschiedener Nahtformen und
- Figur 10 - 12:: verschiedene Prinzipskizze für Varianten der Laserstrahlbewegung am Werkstück.

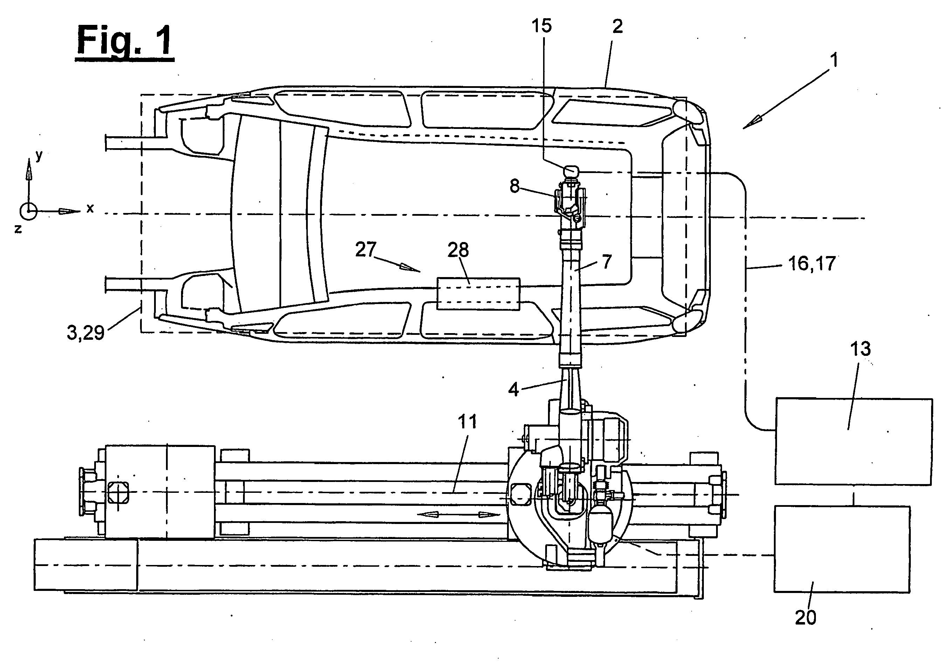

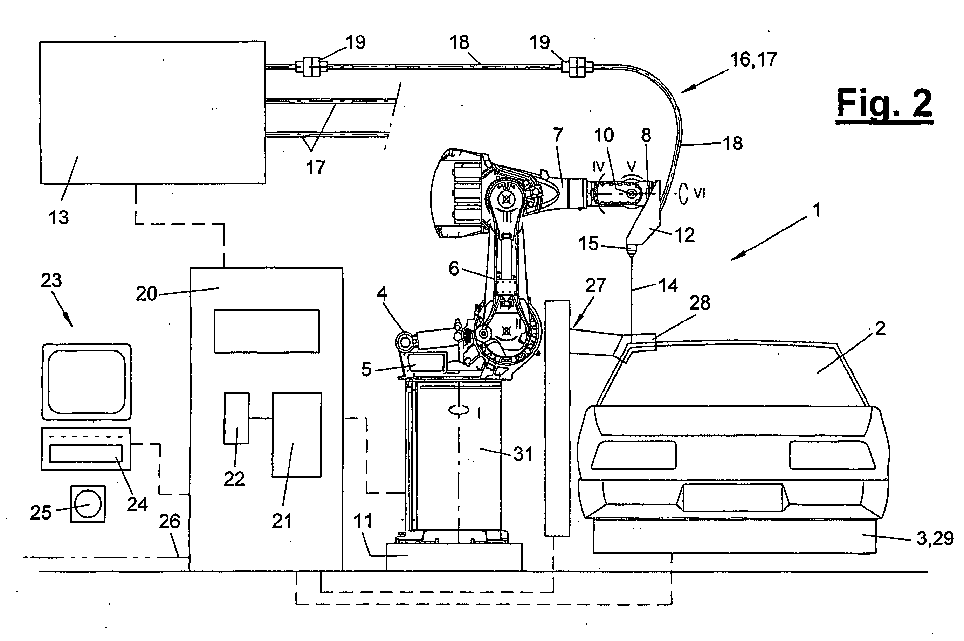

Figur 1 und 2 zeigen in schematischen Draufsichten und Seiten- bzw. Frontansichten den prinzipiellen Aufbau einer Lasereinrichtung (1). Die Lasereinrichtung (1) kann Bestandteil einer Bearbeitungsstation in Form einer eigenständigen Zelle oder einer Zelle bzw. Station in einer Fertigungslinie sein. Die Lasereinrichtung (1) kann ferner mehrfach in der Station vorhanden sein. In der gezeigten Ausführungsform handelt es sich z.B. um eine Geostation oder Framingstation im Karosserierohbau, in der die zunächst lose geklammerte Karosserie (2) ihre endgültige Form erhält. Die Station kann alternativ auch als Ausschweißstation oder Respot-Station ausgebildet sein. Ein Einsatz ist ferner in Fertigungszellen für Karosserieteile, z.B. Seitenwände oder dergleichen möglich. Generell kann die Lasereinrichtung (1) in beliebigen Umgebungen eingesetzt und zur Bearbeitung beliebiger Werkstücke (2) verwendet werden, wobei letztere vorzugsweise Fahrzeugkarosserien oder deren Karosserieteile sind.

Die Lasereinrichtung (1) besteht aus mindestens einem Manipulator (4) mit einem Laserwerkzeug (15), einer Laserquelle (13) und einer Leiteinrichtung (16) für den Transport des Laserlichts von der Laserquelle (13) zum Laserwerkzeug (15). Ferner kann die Lasereinrichtung (1) noch eine gemeinsame Steuerung (20) für den Manipulator (4) und die Laserquelle (13) aufweisen. Zudem kann Bestandteil der Lasereinrichtung (1) ein sogenanntes Tooling (27) sein, welches ebenfalls mit der Steuerung (20) verbunden sein kann.

Der Manipulator (4) kann von beliebig geeigneter Bauart sein und trägt an seinem vorderen Ende eine mehrachsige Hand (8). In der gezeigten und bevorzugten Ausführungsform handelt es sich um einen sechsachsigen Gelenkarmroboter, der auch ein oder mehrere Zusatzachsen (11), z.B. die in Figur 1 und 2 gezeigte lineare Fahrachse haben kann. Der Roboter (4) kann am Anlagenboden, an einem Portal (nicht dargestellt), an einer Seitenwand oder einer sonstigen geeigneten Stelle angeordnet sein.

Der Gelenkarmroboter (4) besteht aus einem Gestell (31), auf dem um eine erste Drehachse I eine Konsole (5) drehbar gelagert ist. An der Konsole (5) ist um eine quer verlaufende Schwenkachse II eine Schwinge (6) schwenkbar gelagert, an deren anderem Ende wiederum über eine dritte, quer liegende Schwenkachse III ein Ausleger oder Roboterarm (7) schwenkbar gelagert ist. An dessen Ende ist die Roboterhand (8) mit ihren drei Dreh- und Schwenkachsen IV,V,VI angeordnet. Die drei Handachsen IV,V,VI schneiden sich vorzugsweise in einem gemeinsamen Kreuzungspunkt (10) und sind orthogonal zueinander ausgerichtet.

Alternativ kann der Manipulator (4) einfacher ausgebildet und mit weniger Achsen ausgerüstet sein. Es kann sich hierbei z.B. um eine Lineareinheit mit zwei translatorischen Achsen in der Art eines Kreuzschlittens handeln. Ferner sind Manipulatorformen mit einer Kombination von linearen und rotatorischen Achsen möglich. Die Hand (8) hat auch in diesen Fällen mindestens zwei einander kreuzende Handachsen.

Das Laserwerkzeug (15) ist als Remote-Laserwerkzeug ausgebildet, welches eine Brennweite F hat und vom Manipulator (5) in einem kontaktfreien Abstand schwebend über dem Werkstück (2) entlang einer Bearbeitungsbahn (30) geführt wird. Zwischen dem Laserwerkzeug (15) und dem Werkstück (2) besteht kein Berührungskontakt, wobei auch auf Andruckrollen und dergleichen andere Führungsmittel verzichtet wird. Die Brennweite F bestimmt den Arbeitsabstand des Laserwerkzeugs (15) vom Werkstück (2) und beträgt vorzugsweise mehr als 300 mm, insbesondere 500 mm bis 1.500 mm und mehr.

Die Brennweite F kann fest sein. Sie kann alternativ veränderlich sein und sich z.B. durch einen Revolver-Optikkopf oder einen Wechsel der Laseroptik umschalten oder mittels einer verfahrbaren Lineareinheit (Fokusnachführung) verstellen lassen.

Das Laserwerkzeug (15) ist in geeigneter Weise am rotatorischen Abtriebsflansch (9) der Hand (8) angeordnet. In der gezeigten und bevorzugten Ausführungsform wird hierfür ein Ausleger (12) eingesetzt, der sich vom Abtriebsflansch (9) schräg nach hinten und nach unten erstreckt, wodurch das am unteren Auslegerende quer montierte Laserwerkzeug (15) mit der nach hinten verlängerten Wirkachse des Laserstrahls (14) den Kreuzungspunkt (10) schneidet. Der Ausleger (12) ist z.B. als rahmenförmiges Gehäuse gestaltet und umgreift mit seinen Seitenwänden beidseits die Hand (8) und das Laserwerkzeug (15).

Alternativ kann der Ausleger (12) auch anders gestaltet sein und sich z.B. in Längsrichtung der letzten Handachse VI erstrecken. Ferner kann auf den Ausleger (12) verzichtet und das Laserwerkzeug (15) direkt am Abtriebsflansch (9) befestigt werden. Die Wirkachse des Laserstrahls (14) muss auch nicht den Kreuzungspunkt (10) schneiden.

Der Laserbearbeitungsprozess kann von beliebiger Art sein. Vorzugsweise handelt es sich um einen Laserschweißprozess. Es kann aber auch ein Laserschneidprozess oder ein anderes Laserverfahren sein. Nachfolgend wird die Lasertechnik mit Bezug auf ein Laserschweißverfahren beschrieben, wobei sich die Darstellungen auch auf andere Laserbearbeitungsverfahren entsprechend übertragen lassen.

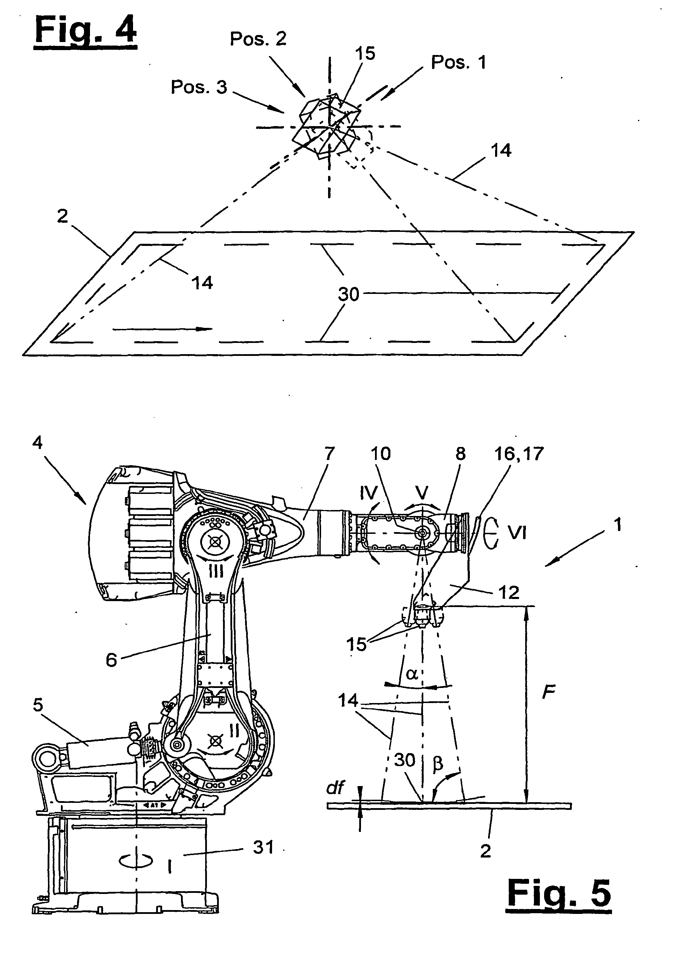

Zum Schweißen wird der Laserstrahl (14) im wesentlichen durch eine Bewegung der Handachsen IV,V,VI um veränderliche räumliche Auslenkwinkel α abgelenkt und dabei über das Werkstück (2) entlang einer in der Steuerung (20) ermittelten und programmierten Bearbeitungs- oder Schweißbahn (30) bewegt. Figur 4 und 5 verdeutlichen diese Kinematik. Der Manipulator (4) hält die Hand (8) über eine entsprechende Ansteuerung seiner Roboterachsen I,II,III derart, dass die Hand (8) sich in Streckstellung mit Abstand oberhalb des zu bearbeitenden Werkstückbereichs befindet und dabei mit ihrem Gehäuse und der Abtriebsachse VT im wesentlichen parallel zu diesem Werkstückbereich ausgerichtet ist.

In einer solchen Stellung, wie sie z.B. in Figur 2, 4 und 5 mit einem vereinfachten ebenen Werkstück (2) dargestellt ist, kann der Laserstrahl (14) über Drehbewegungen der rotatorischen Handachsen V und VI über die Werkstückoberfläche bewegt und dabei um die besagten räumlichen Auslenkwinkel α abgelenkt werden. Figur 4 zeigt schematisch diese Bewegungsmöglichkeit, wobei z.B. durch überlagerte Handachsenbewegungen am Tafelrand eine umlaufende offene oder geschlossene Steppnaht aus abgesetzten kurzen Laserstrichnähten gebildet wird. In Abwandlung des genannten Ausführungsbeispiels kann alternativ oder zusätzlich zur letzten Handachse und Abtriebsachse VI eine Drehbewegung um die erste Handachse IV erfolgen. Dies gilt zumindest in der in Figur 5 gezeigten Streckstellung.

Während der Handachsenbewegungen kann der Manipulator (4) mit seinen anderen Achsen I,II,III in Ruhe bleiben. Etwaige durch den Auslenkwinkel α und die dementsprechende Bogenbahn des Fokuspunktes oder Brennflecks bedingte Höhenabweichungen df (vgl. Figur 5) können gegebenenfalls durch eine Nachführbewegung des Manipulators (5) mit ein oder mehreren seiner Achsen I,II,III kompensiert werden, um den Fokuspunkt stets genau auf der Werkstückoberfläche zu halten. Bei längeren Brennweiten verringert sich die Höhenabweichung df und kann je nach Prozesserfordernis auch unter Verzicht auf eine Nachführbewegung toleriert werden.

Der Manipulator (4) kann außerdem zwischen den einzelnen Bearbeitungs- oder Prozessabschnitten, aber auch während des Schweißprozesses, eine Versatzbewegung über seine Achsen I,II,III und gegebenenfalls auch über die erste Handachse IV ausführen und dabei die Hand (8) und das Laserwerkzeug (15) relativ zum Werkstück (2) führen.

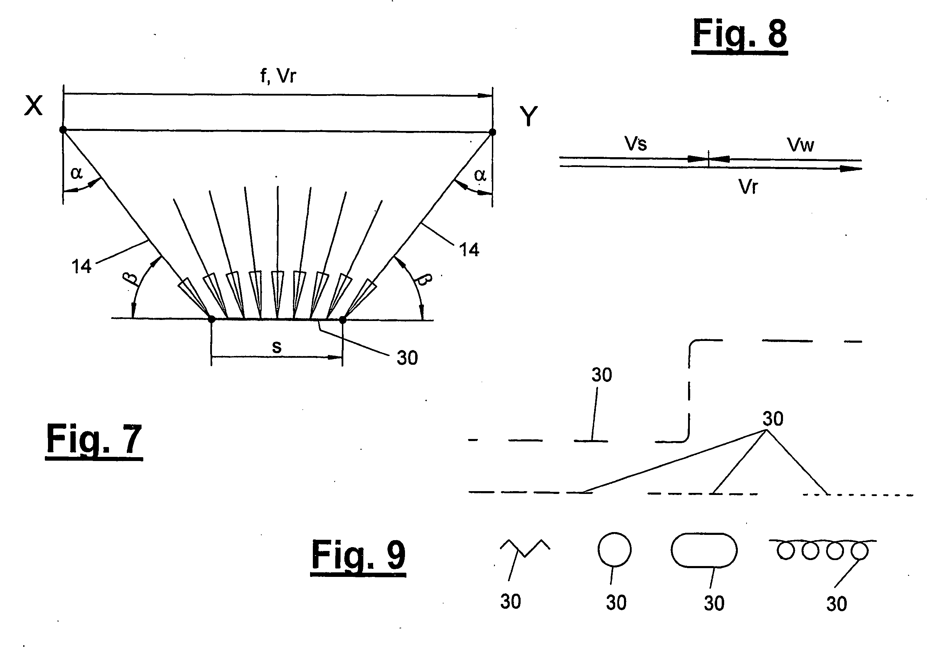

Diese Versatzbewegung und die Handachsenbewegung zur Laserstrahlablenkung können einander überlagert werden. Insbesondere kann der Manipulator (4) eine kontinuierliche Versatzbewegung mit im wesentlichen konstanter Versatzgeschwindigkeit ausführen, wobei die überlagerte Strahlablenkbewegung dieser Versatzbewegung zumindest partiell entgegengerichtet ist. Die Strahlablenkbewegung kann zusätzlich oder alternativ bei der Bewegungsüberlagerung quer zur Versatzbewegung gerichtet sein. Dadurch lassen sich beliebige Nahtformen (30) erzielen, wie sie in Figur 9 in verschiedenen Beispielen angedeutet sind. Die Variationsmöglichkeiten betreffen insbesondere die Form, Länge und Abfolge der einzelnen Nahtabschnitte sowie die räumliche Gesamtform der Naht (30), z.B. Kreise, Spiralen, Winkelstrecken etc..

Figur 7 und 8 verdeutlichen die vorerwähnte Bewegungsüberlagerung. Bei einer parallelen Ausrichtung beider Bewegungen kann z.B. gemäß Figur 8 die Versatzbewegung mit einer hohen Versatzgeschwindigkeit Vr erfolgen, wobei die entgegengerichtete Ablenkbewegung eine kleinere Auslenkgeschwindigkeit Vw erzeugt. Durch die Überlagerung beider entgegen gerichteter Bewegungen ergibt sich am Werkstück (2) an der Bearbeitungsbahn oder Schweißnaht (30) eine Bearbeitungs- oder Schweißgeschwindigkeit Vs. Für das Laser-Remoteschweißen mit einer engen Bündelung und hohen Strahlqualität des Laserstrahls (14) können sehr hohe Schweißgeschwindigkeiten Vs von 9m/min und mehr erzielt werden. Die Versatzgeschwindigkeit Vr und die Auslenkgeschwindigkeit Vw können konstant oder variabel sein.

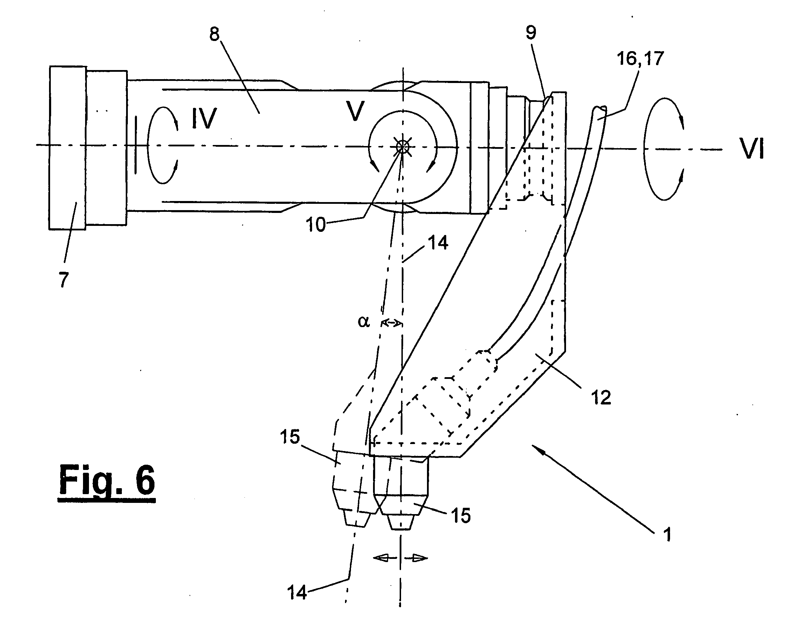

Der Manipulator (4) kann hierbei im wesentlichen kontinuierlich und ohne Unterbrechungen oder Richtungsumkehr sowie ohne Starts und Stopps bewegt werden, was die Verlustzeiten reduziert und die Gesamtgeschwindigkeit des Prozesses wesentlich erhöht. Figur 7 erläutert hierzu die Wegverhältnisse. Der vom Manipulator (4) mit seiner Hand (8) und dem Laserwerkzeug (15) zurückgelegte Versatzweg f ist im wesentlichen parallel und dabei wesentlich größer als der am Werkstück (2) vom Auftreffpunkt des Laserstrahls (14) zurückgelegte Bearbeitungs- oder Schweißweg s entlang der Bearbeitungsbahn (30). Wenn z.B. eine Steppnaht mit mehreren mit gegenseitigem Abstand hintereinander ausgeführten Nahtstrichen gesetzt wird, beginnt gemäß Figur 7 der Schweißprozess bereits an einer Position X, in der der Laserstrahl (14) über eine Handachsenbewegung um den Winkel α ausgelenkt und schräg auf das Werkstück (2) gerichtet wird. Der Auslenkwinkel α ist hierbei der räumliche Winkel, um den das Laserwerkzeug (15) mit dem Laserstrahl (14) aus der Senkrechten oder Normalenrichtung zur Werkstückoberfläche ausgelenkt wird. In dieser Ausgangslage, wie sie in Figur 5 und 6 verdeutlicht wird, hat die Hand (8) außerdem vorzugsweise ihre Streckstellung.

Zu Beginn des Laserschweißprozesses im Punkt X eilt der Laserstrahl (14) der Hand (8) in Richtung der Versatzbewegung voraus und ist schräg auf die Werkstückoberfläche gerichtet, wobei er mit einem Einstrahlwinkel β zur Werkstückoberfläche auftrifft. Diese Ausrichtung, in welcher der Laserstrahl (14) sich über dem Schweißbad befindet, wird auch als stechender Strahleinfall bezeichnet. Im Verlauf des Versatzwegs f wird der Auslenkwinkel α reduziert, wodurch sich die Orientierung des Laserstrahls (14) ändert und der Einstrahlwinkel β sich entsprechend vergrößert. Etwa in der Mitte des Versatzwegs f betragen der Auslenkwinkel α ca. 0° und der Einstrahlwinkel β ca. 90°. Ab diesem Punkt ändert sich die Strahlorientierung, wobei der Auslenkwinkel α negativ wird und betragsmäßig wieder zunimmt. Der Einstrahlwinkel β wird ebenfalls negativ und nimmt betragsmäßig wieder ab. Ab dem besagten Mittelpunkt wird der Laserstrahl (14) vom Laserwerkzeug (15) schräg nach hinten gerichtet, wobei das Laserwerkzeug (15) den Laserauftreffpunkt am Werkstück überholt und voreilt. Diese Ausrichtung wird auch als schleppender Strahleinfall bezeichnet.

Am Ende des Schweißwegs s ist der Manipulator (4) in seiner Versatzbewegung und seinem Versatzweg f am Endpunkt Y weit voraus. Für den nächstfolgenden Nahtabschnitt wird durch eine Handachsenbewegung das Laserwerkzeug (15) bei abgeschaltetem Laserstahl wieder umorientiert und nimmt den vorbeschriebenen positiven Auslenkwinkel α ein, um für den nächsten Schweißprozess am Startpunkt X wieder bereit zu sein.

Diese an einem einfachen ebenen Werkstück und für eine einfache Schweißnaht mit geraden Nahtstrichen beschriebene Kinematik kann mit entsprechenden Modifizierungen auch für kompliziertere Verhältnisse mit z.B. gewölbten Werkstückoberflächen und einer entsprechenden Änderung der Versatzbewegung übertragen werden. Vorzugsweise wird bei der Versatzbewegung der Manipulator (4) derart in seiner Bewegungsbahn programmiert, dass der Kreuzungspunkt (10) der Handachsen IV,V,VI in einer der zu bearbeitenden Werkstückkontur und der gewünschten Bearbeitungs- oder Schweißbahn (30) folgenden räumlichen Bewegungsbahn mit einem im wesentlichen konstanten Arbeitsabstand über das Werkstück (2) geführt wird.

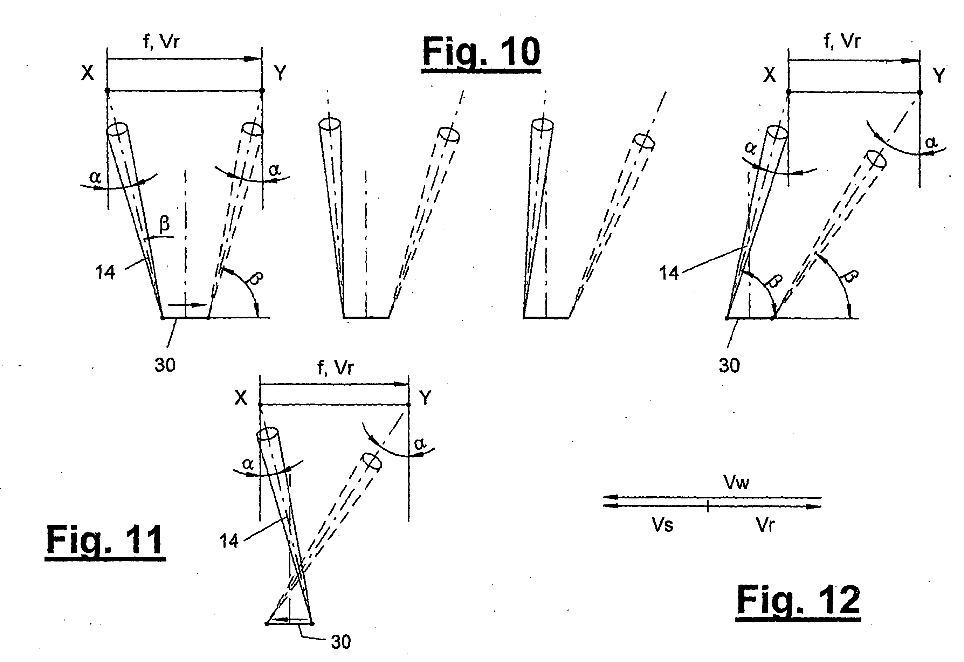

Figur 10 bis 12 zeigen Varianten der Laserstrahlbewegung am Werkstück. Der Laserstrahl (14) zu Beginn des Schweißprozesses ist mit durchgezogenen Strichen und zum Ende des Schweißprozesses gestrichelt dargestellt.

In Figur 7 und Figur 10 verläuft der Schweißfortschritt am Werkstück mit der gleichen Vorwärtsrichtungskomponente wie die Versatzbewegung, was in Figur 10 durch einen Pfeil am Nahtabschnitt (30) verdeutlicht wird. Hierbei ist die Versatzgeschwindigkeit Vr betragsmäßig größer als die entgegengerichte Auslenkgeschwindigkeit Vw.

In Figur 7 und im ersten linken Teilbild von Figur 10 ist am Startpunkt X ein stechender Strahleinfall mit positivem Auslenkwinkel α dargestellt.
Wenn bei einer Steppnaht enge Abstände zwischen den Nahtabschnitten vorhanden sind und der Manipulator (4) eine hohe Versatzgeschwindigkeit Vr hat, kann die Zeit für eine Umorientierung des Laserstrahls aus dem schleppenden Strahleinfall am Ende eines Nahtabschnitts zum Beginn des nächsten Nahtabschnitts knapp werden. In solchen Fällen, aber auch bei anderen Gelegenheiten, kann der Laserstrahl (14) am Beginn des Nahtabschnitts steiler und mit einem kleineren Auslenkwinkel α einfallen, wie dies das zweite Teilbild von Figur 10 verdeutlicht.

Es ist sogar bei Nahtbeginn ein schleppender Strahleinfall mit negativem Auslenkwinkel α möglich, der sich bis zum Nahtende vergrößert. Der Einfallwinkel β behält in diesen Fällen sein Vorzeichen und verkleinert sich über den Schweißweg. Das dritte und das vierte rechte Teilbild von Figur 10 zeigen einen solchen schleppenden Strahleinfall an Anfang und Ende des Nahtabschnitts (30).

Figur 11 und 12 zeigen eine weitere Variante der Laserstrahlablenkung. In diesem Fall wird der Laserstrahl (14) zu Beginn des Schweißprozesses am Punkt X auf das entfernte Ende des Nahtabschnitts (30) gerichtet. Hierbei besteht ein zunächst schleppender Strahleinfall mit einem positiven Auslenkwinkel α. Über dem Verlauf der Versatzbewegung wird der Laserstrahl (14) derart schnell in entgegengesetzter Richtung orientiert, dass die Auslenkgeschwindigkeit Vw betragsmäßig größer als die Versatzgeschwindigkeit Vr ist. Der Schweißfortschritt vollzieht sich dadurch entgegen der Versatzbewegung, was in Figur 11 durch einen linksgerichteten Pfeil verdeutlicht wird. Ab dem senkrechten Einfallswinkel β bis zum Ende des Schweißprozesses hat der gestrichelt dargestellte Laserstrahl (14) wieder einen stechenden Strahleinfall mit einem negativen Auslenkwinkel α. Mit solchen rückwärts gerichteten Schweißfortschritten können die in Figur 9 dargestellten Nahtformen gebildet werden. Zudem können Schuppennähte geschweißt werden, bei denen der Laserstrahl (14) entlang des Schweißwegs mehrmals vorwärts und rückwärts pendelt.

Die Laserquelle (13) kann von beliebiger und geeigneter Art sein. Sie ist in ihrer Leistung veränderlich und wird in Abhängigkeit von den Laserstrahlbewegungen gesteuert. Hierfür ist gemäß der Erfindung eine gemeinsame Steuerung (20) von Manipulator (4) und Laserquelle (13) vorhanden. Die Laserquelle (13) ist vorzugsweise als Faserlaser, Scheibenlaser oder diodengepumpter Nd-YAG-Laser ausgebildet. Eine solche Laserquelle (13) lässt sich bei Bedarf auch kurzzeitig abschalten, was z.B. bei Steppnähten zwischen den einzelnen Nahtabschnitten der Fall ist. Außerdem wird gemäß der Erfindung die Laserleistung der Laserquelle (13) in ihrer Höhe in Abhängigkeit vom Einstrahlwinkel β gesteuert. Das Einkoppelverhalten des Laserstrahls (14) hängt vom Einstrahlwinkel β ab und ist im Bereich von ca. 90° am besten. In diesem Winkelbereich kann die Laserleistung entsprechend verringert werden. Bei betragsmäßig kleineren Einstrahlwinkeln β wie sie z.B. in Figur 7 bei den Start- und Endpunkten X,Y gegeben sind, ist das Einkoppelverhalten schlechter, wobei zur Kompensation die Laserleistung entsprechend erhöht wird.

Die Lasereinrichtung (1) ermöglicht es, die im Bearbeitungs- oder Schweißweg s vom Laserstrahl (14) eingebrachte Streckenenergie zu steuern und zu optimieren. Die Laserleistung lässt sich hierbei auch in Abhängigkeit von der Geschwindigkeit steuern, mit der sich der Auftreffpunkt des Laserstrahls (14) entlang der Schweißbahn (30) am Werkstück (2) bewegt. Diese Bewegung ist abhängig von der Handachsenbewegüng und der Laserstrahlablenkung sowie der gegebenenfalls überlagerten Versatzbewegung. Je höher die Bewegungsgeschwindigkeit des Auftreffpunktes ist, desto höher kann die Laserleistung sein. Umgekehrt verringert sich mit der Bewegungsgeschwindigkeit die erforderliche Laserleistung. Die eingebrachte Streckenenergie kann hierdurch in der gewünschten Weise gesteuert und z.B. im Wesentlichen konstant gehalten werden. Je nach Prozesserfordernissen kann sie aber auch örtlich und zeitlich variieren, um z.B. Dicken- oder Lagenunterschiede im Werkstück zu berücksichtigen. Die Bewegungsgeschwindigkeit des Strahlauftreffpunktes und die daran gekoppelte Laserleistung können außerdem über den Schweißweg oder Nahtlänge s variieren.

Die vorbeschriebenen unterschiedlichen Einflussgrößen für die Laserleistung können einander überlagern und sich gegenseitig beeinflussen. In einer Technologiedatenbank können hierfür die erforderlichen Laser-Prozessparameter und insbesondere die Steuerungsdaten für die Laserleistung in Abhängigkeit von der Bewegungskinematik des Laserstrahls (14) hinterlegt und gespeichert werden. Als Bewegungsparameter für den Laserstrahl (14) können hierbei die Versatzgeschwindigkeit Vr, der Versatzweg f, die Auslenkgeschwindigkeit Vw, der Auslenkwinkel α bzw. der Einstrahlwinkel β, die Brennweite F, gegebenenfalls der Arbeitsabstand des Kreuzungspunktes (10) gegenüber der Werkstückoberfläche und die gewünschte Nahtform bzw. deren Verlauf sowie evtl. weitere Daten eingegeben werden.

Die gemeinsame Steuerung (20) beinhaltet mindestens eine Recheneinheit (21) mit ein oder mehreren angeschlossenen Speichern (22), in denen einerseits die vorerwähnte Technologiedatenbank(en) und andererseits mindestens ein Programm gespeichert sind, mit dem die vom Manipulator (4) durchzuführenden Versatz- und Handachsenbewegungen und die vorerwähnten Laser-Prozessparameter, insbesondere die erforderliche Laserleistung, automatisch ermittelt und während des Schweißprozesses eingestellt, abgearbeitet und ggf. überwacht sowie protokolliert werden.

Die Ermittlung geschieht an Hand von Werkstückdaten, die der Steuerung (20) über eine Eingabeeinheit (23) vor Ort eingegeben werden. Diese Werkstückdaten beinhalten zum einen die gewünschte ein- oder mehrteilige Bearbeitungsbahn (30). Dies können Daten über Ort, Verlauf und Art bzw. Nahtform der Schweißbahn (30) am Werkstück (2) sein. Hierbei können beliebige Nahtformen vorgegeben werden, wie sie z.B. in Figur 9 schematisch dargestellt sind. Dies können insbesondere Steppnähte mit mehreren Nahtabschnitten beliebiger Länge und beliebiger Abstände sein. Alternativ können durchgehende Schweißnähte vorgegeben werden. Wie Figur 9 verdeutlicht, können außerdem Kreis- oder Ringnähte, Zick-Zack-Nähte, Schuppennähte mittels aneinander gereihter Bewegungsspiralen etc. vorgegeben werden.

Zu den Werkstückdaten zählen ferner Angaben über Material, Oberflächenbeschaffenheit, Zahl und gegenseitige Lage der Bleche in der Prozesszone und dgl. andere Daten. Diese Werkstückdaten beeinflussen ebenfalls die Laserleistung. Für Mehrlagenschweißungen und für dickere Bleche sind z.B. höhere Leistungen erforderlich. Gegebenenfalls müssen auch mehrere dünne Schweißnähte nebeneinander oder übereinander oder auch breitere Schweißnähte gesetzt werden. Eine Verbreiterung der Schweißnähte kann man z.B. durch einen bewussten Versatz zwischen Laserstrahlfokus und Auftreffpunkt erzielen. Je größer dieser Versatz in der positiven oder negativen Richtung ist, desto größer ist der Strahlquerschnitt am Auftreffpunkt und desto größer ist die Schweißnahtbreite, wobei eine entsprechend höhere Laserleistung nützlich oder erforderlich ist.

In der Steuerung (20) ist ein Programm hinterlegt, welches an Hand der vorerwähnten Werkstückdaten selbsttätig die vom Manipulator (4) durchzuführenden Achsenbewegungen und auch die Bewegungs- und Führungsbahn für die Hand (8) sowie den Kreuzungspunkt (10) und auch die erforderlichen Handachsenbewegungen für die Strahlablenkung berechnet, speichert und dem Manipulator (4) als programmierte Bahn vorgibt. Auch hier ist zudem eine Überwachung und Protokollierung der Bewegungen möglich. Unter Berücksichtigung dieser Bewegungsdaten kann das gleiche oder ein anderes'Programm zudem die erforderlichen Laser-Prozessparameter, insbesondere die erforderliche Laserleistung der Laserquelle (13) in den verschiedenen Prozessabschnitten und entlang der Bearbeitungsbahn (30) berechnen, speichern und während des Prozesses abarbeiten. Vom Bediener oder Betreiber sind somit in der vollen Ausbaustufe im Wesentlichen nur die Werkstückdaten einzugeben.

Diese Eingabe kann auf verschiedene Weise erfolgen. Figur 2 zeigt hierfür schematisch verschiedene Möglichkeiten. Dies kann z.B. eine manuelle Eingabe von einem Bediener über eine Tastatur (24) an einer Eingabestation mit einem Monitor sein. Hierbei können auch andere Eingabegeräte, wie eine Maus, ein Tableau oder dergleichen verwendet werden. Die Werkstückdaten können ferner über ein oder mehrere wechselbare und transportable Datenträger (25) in Verbindung mit entsprechenden Laufwerken der Steuerung (20) eingegeben werden. Dies können z.B. CDs, DVDs, Bänder oder dergleichen sein. Ferner ist eine Datenübergabe per Datenfernübertragung mittels ein oder mehrerer Datenleitungen (26), z.B. auch innerhalb eines Netzwerks, möglich. Hierfür kann eine Kabelverbindung, aber auch eine berührungslose Datenfernübertragung mittels Funk, Infrarot oder dergleichen vorgesehen sein.

Die Leiteinrichtung (16) für den Laserstrahl (14) kann in beliebig geeigneter Weise ausgebildet sein. In der gezeigten Ausführungsform besteht sie aus einem flexiblen Lichtleiterkabel (17), welches die Laserquelle (13) mit dem Laserwerkzeug (15) verbindet. Alternativ kann die Leiteinrichtung (16) auch aus einer mit Rohren, Gelenken, Teleskopabschnitten und Spiegeln versehenen Strahlführung bestehen. Daneben sind auch andere beliebige Leiteinrichtungen möglich.

Die Leiteinrichtung (16) ist vorzugsweise modular aufgebaut und besteht aus mehreren Leiterabschnitten (18), die durch Leiterkupplungen (19) untereinander verbunden werden können. Dies bietet eine Art Baukastensystem und erlaubt es, die Leiteinrichtung (16) an den jeweiligen Einsatzzweck anzupassen und die jeweils erforderlichen Längen und Verläufe der Leiteinrichtungen (16) zu bilden. Die Leiteinrichtung (16) ist hierdurch hoch flexibel.

Eine Laserquelle (13) kann mehrere Manipulatoren (4) und Laserwerkzeuge (15) gemeinsam über entsprechend mehrere Leiteinrichtungen (16) versorgen. Dies ist in Figur 2 durch zwei schematisch dargestellte zusätzliche Leiterkabel (17) symbolisiert. Über die Steuerung (20) und ein entsprechendes Programm kann hierbei die Laserquelle (13) auf die unterschiedlichen Leiteinrichtungen (16) und Laserwerkzeuge (15) umgeschaltet werden. Hierbei können außerdem andere Laserwerkzeuge, die z.B. an Spannrahmen oder dergleichen angeordnet sind, angeschlossen werden. Die Umschaltung der Laserenergie und des Laserstrahls (14) können auch auf anderem Weg, z.B. durch verstellbare Laserstrahlweichen oder dergleichen erfolgen. In weiterer Abwandlung ist es möglich, mit einer aus mehreren Einzelmodulen bestehenden Laserquelle (13) zu arbeiten und jedes Modul mit einem zugehörigen Laserwerkzeug (15) zu verbinden. Auch hier ist alternativ eine Umschaltung möglich.

Durch die erwähnte Umschaltung wird die Laserenergie optimal ausgenutzt. Während der Nebenzeiten der einzelnen Manipulatoren (4) bzw. Laserwerkzeuge (15), in denen z.B. das Laserwerkzeug (15) örtlich versetzt oder umorientiert wird, kann die Laserleistung auf ein anderes, prozessbereites Laserwerkzeug (15) umgeschaltet werden. Nach Beendigung der Nebenzeit wird die Laserleistung wieder auf das erste Laserwerkzeug (15) zurückgeschaltet.

Das eingangs erwähnte Tooling (27) ist in Figur 1 und 2 schematisch angedeutet. Es kann ebenfalls genauso wie die Manipulatoren (4) und die Laserquelle (13) an die gemeinsame Steuerung (20) angeschlossen sein und von dieser in Abhängigkeit vom Prozess beaufschlagt werden. Das Tooling (27) kann alternativ Bestandteil der Station sein. Das Tooling (27) kann z.B. aus ein oder mehreren verschiedenen Werkzeugen bestehen. In Figur 1 und 2 ist hierfür z.B. ein Spannwerkzeug (28) angedeutet, welches aus ein oder mehreren und gegebenenfalls beweglichen und austauschbaren Spannrahmen mit daran befestigten einzelnen Spannwerkzeugen oder sonstigen Bearbeitungswerkzeugen für das Werkstück (2) besteht. Zum Tooling (27) können ferner eine schaltbare örtliche Schutzgaszuführung am Werkstück (2), eine Rauchabsaugung oder dergleichen zählen.

Das Tooling (27) kann ferner einen Werkstückträger (3) für die Karosserien oder Karosserieteile (2) und gegebenenfalls auch eine Transporteinrichtung (29) für den Werkstückträger (3) und/oder die Karosserie/Karosserieteile (2) beinhalten. Eine solche Transporteinrichtung (29) kann zudem eine Positioniereinrichtung aufweisen, mit der die Karosserie oder Karosserieteile (2) in die prozessgerechte Position gebracht und dort fixiert werden. Der Transport und Wechsel der Karosserien oder Karosserieteile (2) kann in beliebig geeigneter Weise über entsprechende stationäre Förderer, wie Rollenbahnen oder dergleichen, aber auch durch frei programmierbare Förderer, wie Transportroboter etc. bewirkt werden. Diese sind ebenfalls an die Steuerung (20) angeschlossen.

Abwandlungen der gezeigten und beschriebenen Ausführungsformen sind in verschiedener Weise möglich. Dies betrifft zum einen die Ausgestaltung und Anordnung der Manipulatoren (4) und der Laserquelle (13) sowie der weiteren Komponenten der Lasereinrichtung (1). Variabel ist auch das Laserwerkzeug (15), welches z.B. über Strahlspaltung mit zwei oder mehr Laserstrahlen (14) arbeiten kann. Außerdem kann in das Laserwerkzeug (15) ein automatischer linearer Fokus- und Höhenausgleich integriert sein. Bei einer entsprechenden Ausgestaltung der Laserquelle (13) und der Leiteinrichtung (16) kann außerdem das Laserwerkzeug (15) mit einem Bündel von mehreren einzelnen schaltbaren Laserstrahlen arbeiten.

### BEZUGSZEICHENLISTE

- 1: Lasereinrichtung
- 2: Werkstück, Karosserie, Karosserieteil
- 3: Werkstückträger
- 4: Manipulator, Roboter
- 5: Konsole
- 6: Schwinge
- 7: Ausleger, Roboterarm
- 8: Hand, Roboterhand
- 9: Abtriebsflansch
- 10: Kreuzungspunkt
- 11: Zusatzachse
- 12: Ausleger
- 13: Laserquelle
- 14: Laserstrahl
- 15: Laserwerkzeug, Remote-Laserkopf
- 16: Leiteinrichtung für Laserstrahl
- 17: Leiterkabel
- 18: Leiterabschnitt
- 19: Leiterkupplung
- 20: Steuerung
- 21: Recheneinheit
- 22: Speicher
- 23: Eingabeeinheit
- 24: Tastatur
- 25: Datenträger
- 26: Datenleitung
- 27: Werkzeug, Tooling
- 28: Spannwerkzeug
- 29: Transporteinrichtung
- 30: Bearbeitungsbahn, Schweißbahn
- 31: Gestell

- I: Roboterachse, Drehachse
- II: Roboterachse, Schwenkachse
- III: Roboterachse, Schwenkachse
- IV: Handachse, Drehachse
- V: Handachse, Schwenkachse
- VI: Handachse, Drehachse

- Vr: Versatzgeschwindigkeit Roboter
- Vs: Bearbeitungsgeschwindigkeit, Schweißgeschwindigkeit
- Vw: Auslenkgeschwindigkeit

- *f*: Versatzweg Roboter
- *s*: Bearbeitungsweg, Schweißweg, Nahtlänge

- F: Brennweite Laser
- α: Auslenkwinkel, Orientierungsänderung Laserstrahl
- β: Einstrahlwinkel
- *df*: Höhenabweichung, Höhenfehler

## Patentansprüche

1. Verfahren zum Laserbearbeiten, insbesondere Laserschweißen, von Werkstücken (2), insbesondere Fahrzeugkarosserien und Karosserieteilen, wobei ein Laserstrahl (14) von mindestens einer Laserquelle (13) über eine Leiteinrichtung (16) zu einem Laserwerkzeug (15) an einer mehrachsigen Hand (8) mindestens eines Manipulators (4) geführt und auf das Werkstück (2) gerichtet wird, wobei der Manipulator (4) ein Remote-Laserwerkzeug (15) mit einer Brennweite F in einem kontaktfreien Abstand schwebend über dem Werkstück (2) entlang einer Bearbeitungsbahn (30) führt und dabei den Laserstrahl (14) im wesentlichen über eine Bewegung der Handachsen IV,V,VI um veränderliche Auslenkwinkel α ablenkt, wobei die in ihrer Leistung veränderliche Laserquelle (13) in Abhängigkeit von den Laserstrahlbewegungen und vom Einstrahlwinkel des Laserstrahls (14) am Werkstück (2) gesteuert wird und wobei die Laserquelle (13) und der Manipulator (4) von einer gemeinsamen Steuerung (20) beaufschlagt werden.

2. Verfahren nach Anspruch 1, **dadurch gekennzeichnet, dass** der Manipulator (4) die Hand (8) in einer Versatzbewegung relativ zum Werkstück (2) führt, wobei die Strahlablenkbewegung der Handachsen IV,V,VI der Versatzbewegung überlagert wird.

3. Verfahren nach Anspruch 1 oder 2, **dadurch gekennzeichnet, dass** der Manipulator (4) eine im wesentlichen kontinuierliche Versatzbewegung durchführt, wobei die überlagerte Strahlablenkbewegung der Versatzbewegung zumindest partiell entgegen gerichtet ist.

4. Verfahren nach Anspruch 1, 2 oder 3, **dadurch gekennzeichnet, dass** in einer Recheneinheit (21) und in mindestens einem Speicher (22) der Steuerung (20) ein oder mehrere Programme und mindestens eine Technologiedatenbank gespeichert und abgearbeitet werden, mit denen in der Recheneinheit (21) an Hand von eingegebenen Werkstückdaten die vom Manipulator (4) durchzuführenden Bewegungen und die Laser-Prozessparameter automatisch ermittelt und ausgeführt werden.

5. Verfahren nach einem der vorhergehenden Ansprüche, **dadurch gekennzeichnet, dass** die Leistung der Laserquelle (13) und die vom Manipulator (4) durchzuführenden Versatz- und Strahlablenkbewegungen nach der am Werkstück (2) einzubringenden Streckenenergie ermittelt und gesteuert werden.

6. Lasereinrichtung zum Laserbearbeiten, insbesondere Laserschweißen, von Werkstücken (2), insbesondere Fahrzeugkarosserien und Karosserieteilen, mit mindestens einer Laserquelle (13), die über eine Leiteinrichtung (16) mit einem Laserwerkzeug (15) an einer mehrachsigen Hand (8) mindestens eines Manipulators (4) verbindbar ist, wobei der Manipulator (4) ein Remote-Laserwerkzeug (15) mit einer Brennweite F hält und in einem kontaktfreien Abstand schwebend über dem Werkstück (2) entlang einer Bearbeitungsbahn (30) führt, wobei der Manipulator (4) in den Bewegung seiner Handachsen IV,V,VI derart steuerbar ist, dass der Laserstrahl (14) um veränderliche Auslenkwinkel α ablenkbar ist, , wobei die Laserquelle (13) und der Manipulator (4) eine gemeinsame Steuerung (20) aufweisen und wobei die Laserquelle (13) mit du gemeinsame Steuerung (20) in ihrer Leistung veränderlich und in Abhängigkeit von den Laserstrahlbewegungen und vom Einstrahlwinkel des Laserstrahls (14) am Werkstück (2) steuerbar ist.

7. Lasereinrichtung nach Anspruch 6, **dadurch gekennzeichnet, dass** die Steuerung (20) mindestens eine Recheneinheit (21) und mindestens einen Speicher (22) mit ein oder mehreren Programmen aufweist.

8. Lasereinrichtung nach Anspruch 7, **dadurch gekennzeichnet, dass** die Steuerung (20) mindestens einen Speicher (22) mit mindestens einer Technologiedatenbank aufweist, mit der an Hand von eingegebenen Werkstückdaten die vom Manipulator (4) durchzuführenden Bewegungen und die Laser-Prozessparameter automatisch ermittelbar und ausführbar sind.

9. Lasereinrichtung nach einem der Ansprüche 6 bis 8, **dadurch gekennzeichnet, dass** die Leistung der Laserquelle (13) und die vom Manipulator (4) durchzuführenden Versatz- und Strahlablenkbewegungen nach der am Werkstück (2) einzubringenden Streckenenergie ermittelbar und steuerbar sind.

10. Lasereinrichtung nach einem der Ansprüche 6 bis 9, **dadurch gekennzeichnet, dass** die Steuerung (20) eine Eingabeeinheit (23) zur Eingabe von Werkstückdaten vom Betreiber vor Ort aufweist.

11. Lasereinrichtung nach einem der Ansprüche 6 bis 10, **dadurch gekennzeichnet, dass** die Lasereinrichtung (1) ein oder mehrere Werkzeuge (27) für das Werkstück (2), insbesondere Spannwerkzeuge (28) und/oder eine Transporteinrichtung (29), aufweist, die mit der Steuerung (20) verbunden sind.

12. Lasereinrichtung nach einem der Ansprüche 6 bis 11, **dadurch gekennzeichnet, dass** die Laserquelle (13) als Faserlaser, Scheibenlaser oder diodengepumpter Nd-YAG-Laser ausgebildet ist.

13. Lasereinrichtung nach einem der Ansprüche 6 bis 12, **dadurch gekennzeichnet, dass** das Laserwerkzeug (15) eine umschaltbare oder verstellbare Brennweite F aufweist.

14. Lasereinrichtung nach einem der Ansprüche 6 bis 13, **dadurch gekennzeichnet, dass** das Laserwerkzeug (15) eine Brennweite von mehr als 300 mm, vorzugsweise 500 mm bis 1.500 mm oder mehr aufweist.

15. Lasereinrichtung nach einem der Ansprüche 6 bis 14, **dadurch gekennzeichnet, dass** die Lasereinrichtung (1) mehrere Manipulatoren (4) mit Laserwerkzeugen (15) aufweist, wobei die gemeinsame Laserquelle (13) von der Steuerung (20) auf verschiedene Laserwerkzeuge (15) umschaltbar ist.

16. Lasereinrichtung nach einem der Ansprüche 6 bis 15, **dadurch gekennzeichnet, dass** der Manipulator (4) als mehrachsiger Industrieroboter, vorzugsweise als sechsachsiger Gelenkarmroboter mit Roboterachsen I-VI, ausgebildet ist, wobei die Hand (8) drei rotatorische Handachsen IV,V,VI aufweist.

## Claims

1. Method for laser machining, in particular laser welding, of workpieces (2), in particular vehicle chassis and chassis parts, wherein a laser beam (14) from at least one laser source (13) is guided via a guiding device (16) to a laser tool (15) on a multi-axis hand (8) of at least one manipulator (4) and directed onto the workpiece (2), wherein the manipulator (4) guides a remote laser tool (15) with a focal length F such that it floats over the workpiece (2) at a contactless spacing along a machining track (30) and in the process deflects the laser beam (14) substantially via a movement of the hand axes IV, V, VI by variable deflection angles α, wherein the laser source (13), which is variable in terms of its power, is controlled as a function of the laser beam movements and of the angle of incidence of the laser beam (14) on the workpiece (2) and wherein the laser source (13) and the manipulator (4) are actuated by a common controlled (20).

2. Method according to Claim 1, **characterized in that** the manipulator (4) guides the hand (8) in an offset movement relative to the workpiece (2), wherein the beam deflection movement of the hand axes IV, V, VI is superimposed onto the offset movement.

3. Method according to Claim 1 or 2, **characterized in that** the manipulator (4) carries out a substantially continuous offset movement, wherein the superposed beam deflection movement is at least partially opposed to the offset movement.

4. Method according to Claim 1, 2 or 3, **characterised in that** in a computer unit (21) and in at least one memory (22) of the controller (20) one or more programs and at least one technology database are stored and executed, which are used to automatically ascertain and carry out the movements to be carried out by the manipulator (4) and the laser process parameters in the computer unit (21) using input workpiece data.

5. Method according to one of the preceding claims, **characterized in that** the power of the laser source (13) and the offset and beam deflection movements to be carried out by the manipulator (4) are ascertained and controlled according to the path energy to be applied at the workpiece (2).

6. Laser device for laser machining, in particular laser welding, of workpieces (2), in particular vehicle chassis and chassis parts, having at least one laser source (13) which can be connected via a guiding device (16) to a laser tool (15) on a multi-axis hand. (8) of at least one manipulator (4), wherein the manipulator (4) holds a remote laser tool (15) with a focal length F and guides it such that it floats over the workpiece (2) at a contactless spacing along a machining track (30), wherein the manipulator (4) can be controlled in the movement of its hand axes IV, V, VI such that the laser beam (14) can be deflected by variable deflection angles α, wherein the laser source (13) and the manipulator (4) have a common controller (20) and wherein the laser source (13) , with the common controller (20), is variable in terms of its power and can be controlled as a function of the laser beam movements and of the angle of incidence of the laser beam (14) on the workpiece (2).

7. Laser device according to Claim 6, **characterized in that** the controller (20) has at least one computer unit (21) and at least one memory (22) with one or more programs.

8. Laser device according to Claim 7, **characterized in that** the controller (20) has at least one memory (22) with at least one technology database, which can be used to automatically ascertain and carry out the movements to be carried out by the manipulator (4) and the laser process parameters using input workpiece data.

9. Laser device according to one of Claims 6 to 8, **characterized in that** the power of the laser source (13) and the offset and beam deflection movements to be carried out by the manipulator (4) can be ascertained and controlled according to the path energy to be applied at the workpiece (2).

10. Laser device according to one of Claims 6 to 9, **characterized in that** the controller (20) has an input unit (23) for inputting workpiece data by way of the operator in situ.

11. Laser device according to one of Claims 6 to 10, **characterized in that** the laser device (1) has one or more tools (27) for the workpiece (2), in particular clamping tools (28) and/or a transport device (29), which are connected to the controller (20).

12. Laser device according to one of Claims 6 to 11, **characterized in that** the laser source (13) is designed in the form of a fibre laser, disc laser or diode-pumped Nd:YAG laser.

13. Laser device according to one of Claims 6 to 12, **characterized in that** the laser tool (15) has a switchable or adjustable focal length *F*.

14. Laser device according to one of Claims 6 to 13, **characterized in that** the laser tool (15) has a focal length of more than 300 mm, preferably 500 mm to 1500 mm or more.

15. Laser device according to one of Claims 6 to 14, **characterized in that** the laser device (1) has a plurality of manipulators (4) with laser tools (15), wherein the common laser source (13) can be switched to different laser tools (15) by the controller (20).

16. Laser device according to one of Claims 6 to 15, **characterized in that** the manipulator (4) is designed in the form of a multi-axis industrial robot, preferably a six-axis articulated arm robot with robot axes I-VI, wherein the hand (8) has three rotational hand axes IV, V, VI.

## Revendications

1. Procédé de traitement au laser, en particulier de soudage au laser, de pièces (2), notamment de carrosseries de véhicule et de pièces de carrosserie, dans lequel on guide un faisceau laser (14) depuis au moins une source laser (13) au moyen d'un dispositif de guidage (16) jusqu'à un outil laser (15) à une main multiaxiale (8) d'au moins un manipulateur (4) et on le dirige vers la pièce (2), dans lequel le manipulateur (4) guide une outil laser télécommandé (15) ayant une distance focale F et flottant au-dessus de la pièce (2) le long d'une trajectoire de traitement (30) et dévie en l'occurrence le faisceau laser (14) essentiellement par un mouvement des axes de la main IV, V, VI selon des angles de déviation a variables, dans lequel on commande la source laser (13) de puissante variable en fonction des mouvements du faisceau laser et de l'angle d'incidence du faisceau laser (14) sur la pièce (2) et dans lequel on agit sur la source laser (13) et sur le manipulateur (4) au moyen d'une commande commune (20).

2. Procédé selon la revendication 1, **caractérisé en ce que** le manipulateur (4) guide la main (8) en un mouvement de décalage par rapport à la pièce (2), dans lequel le mouvement des axes de la main IV, V, VI, pour la déviation du faisceau est superposé au mouvement de décalage.

3. Procédé selon la revendication 1 ou 2, **caractérisé en ce que** le manipulateur (4) exécute un mouvement de dé&calage essentiellement continu, dans lequel le mouvement superposé de décalage du faisceau est au moins en partie orienté à l'opposé du mouvement de décalage.

4. Procédé selon la revendication 1, 2 ou 3, **caractérisé en ce que** l'on mémorise et on exécute dans une unité de calcul (21) et dans au moins une mémoire (22) de la commande (20) un ou plusieurs programmes et au moins une banque de données technologiques, avec lesquels on détermine et on exécute automatiquement dans l'unité de calcul (21), à l'aide de données stockées de la pièce, les mouvements à effectuer par le manipulateur (4) et les paramètres du processus.

5. Procédé selon l'une quelconque des revendications précédentes, **caractérisé en ce que** l'on détermine et on commande la puissance de la source laser (13) et les mouvements de décalage et de déviation du faisceau laser à exécuter par le manipulateur (4) selon la gamme d'énergie à appliquer sur la pièce (2).

6. Dispositif laser pour le traitement au laser, en particulier le soudage au laser, de pièces (2), notamment de carrosseries de véhicule et de pièces de carrosserie, avec au moins une source laser (13), qui peut être reliée au moyen d'un dispositif de guidage (16) à un outil laser (15) sur une main multiaxiale (8) d'au moins un manipulateur (4), dans lequel le manipulateur (4) porte un outil laser télécommandé (15) ayant une distance focale F et le guide le long d'une trajectoire de traitement (30) en flottant à une distance sans contact au-dessus de la pièce (2), dans lequel le manipulateur (4) peut être commandé, pour les mouvements des axes de sa main IV, V, VI, de telle manière que le faisceau laser (14) puisse être dévié selon des angles de déviation variables α, dans lequel la source laser (13) et le manipulateur (4) présentent une commande commune (20), et dans lequel la source laser (13) peut être commandée avec la commande commune (20) à une puissance variable et en fonction des mouvements du faisceau laser et de l'angle d'incidence du faisceau laser (14) sur la pièce (2).

7. Dispositif laser selon la revendication 6, **caractérisé en ce que** la commande (20) comprend au moins une unité de calcul (21) et au moins une mémoire (22) avec un ou plusieurs programmes.

8. Dispositif laser selon la revendication 7, **caractérisé en ce que** la commande (20) comprend au moins une mémoire (22) avec au moins une banque de données technologiques, avec laquelle les mouvements à exécuter par le manipulateur (4) et les paramètres du traitement au laser peuvent être déterminés et exécutés automatiquement à l'aide des données de pièce mémorisées.

9. Dispositif laser selon l'une quelconque des revendications 6 à 8, **caractérisé en ce que** la puissance de la source laser (13) et les mouvements de décalage et de déviation du faisceau que le manipulateur (4) doit effectuer peuvent être déterminés et commandés selon la gamme d'énergie à appliquer à la pièce (2).

10. Dispositif laser selon l'une quelconque des revendications 6 à 9, **caractérisé en ce que** la commande (20) comprend une unité d'entrée (23) pour permettre à l'utilisateur d'entrer des données sur place.

11. Dispositif laser selon l'une quelconque des revendications 6 à 10, **caractérisé en ce que** le dispositif laser (1) comprend une ou plusieurs outils (27) pour la pièce (2), en particulier des outils de serrage (28) et/ou un dispositif de transport (29), qui sont reliés à la commande (20).

12. Dispositif laser selon l'une quelconque des revendications 6 à 11, **caractérisé en ce que** la source laser (13) est un laser à fibres, un laser à disque ou un laser Nd-YAG à pompage par diode.

13. Dispositif laser selon l'une quelconque des revendications 6 à 12, **caractérisé en ce que** l'outil laser (15) présente une distance focale F commuable ou réglable.

14. Dispositif laser selon l'une quelconque des revendications 6 à 13, **caractérisé en ce que** l'outil laser (15) présente une distance focale de plus de 300 mm, de préférence de 500 mm à 1.500 mm ou davantage.

15. Dispositif laser selon l'une quelconque des revendications 6 à 14, **caractérisé en ce que** le dispositif laser (1) comporte plusieurs manipulateurs (4) avec des outils laser (15), dans lequel la source laser commune (13) peut être commutée par la commande (20) sur différents outils laser (15).

16. Dispositif laser selon l'une quelconque des revendications 6 à 15, **caractérisé en ce que** le manipulateur (4) est un robot industriel à plusieurs axes, de préférence un robot à bras articulé à six axes avec des axes de robot I - VI, dans lequel la main (8) comprend trois axes manuels rotatifs IV, V, VI.
